# EUROPEAN PATENT APPLICATION

(11) **EP 4 525 079 A1**
(43) Date of publication of application: **19.03.2025**
(21) Application number: 23859081.4
(22) Date of filing: 07.08.2023
(51) Int. Cl.: H01M 4/36, H01M 4/525, H01M 4/13

(54) **POSITIVE ELECTRODE ACTIVE MATERIAL AND USE THEREOF**

(30) Priority: 02.09.2022 CN 202211072411
(71) Applicant: Zhuhai CosMX Battery Co., Ltd., Zhuhai, Guangdong 519180 (CN)
(72) Inventor: ZENG, Jiajiang, Zhuhai, Guangdong 519180 (CN); XIA, Dingguo, Zhuhai, Guangdong 519180 (CN); LI, Suli, Zhuhai, Guangdong 519180 (CN)
(74) Representative: Vossius & Partner Patentanwälte Rechtsanwälte mbB
(86) International application number: PCT/CN2023/111591
(87) International publication number: WO 2024/046046

(57) **Abstract**

The present application provides a positive electrode active material and its use, where the positive electrode active material includes a lithium metal oxide as shown in Formula 1 or Formula 2; in an X-ray diffraction spectrum, the lithium metal oxide has a Cmca space group of a cubic lattice system , and has a 002 peak with a 2θ of 17.9°-18.1°, and a 131 peak with a 2θ of 67.0°-67.5°. The positive electrode active material of the present application is beneficial to improving the cycle performance and specific capacity of lithium-ion batteries.

## Description

The present application claims priority to Chinese Patent Application No. 202211072411.2, entitled with "A positive electrode active material and its use", filed with China National Intellectual Property Administration on September 2, 2022, the disclosure of which is incorporated in the present application by reference in its entirety.

### TECHNICAL FIELD

The present application relates to an electrode sheet material, and in particular to a positive electrode active material and its use, belonging to the technical field of secondary batteries.

### BACKGROUND

With the development and advancement of lithium-ion battery technology, there are higher capacity requirements on battery capacity. In the composition of lithium-ion batteries, the capacity of positive electrode active materials plays a vital role in the capacity of lithium-ion batteries.

In order to increase the capacity of lithium-ion batteries, the most commonly used method is to increase their charge and discharge voltage. However, as the voltage increases, the crystal structure of the positive electrode active material will collapse, leading to a series of problems such as rapid capacity decay and significantly reduced cycle performance of the battery.

Therefore, developing a positive electrode active material for lithium-ion batteries with high specific capacity and good cycle performance is a technical problem to be solved urgently in this field.

### SUMMARY

The present application provides a positive electrode active material, the special composition and crystal phase structure of the positive electrode active material are helpful to improve the specific capacity and cycle performance of the battery, especially under high voltage conditions, the battery can still perform excellently.

The present application provides a positive electrode sheet, which includes the above-mentioned positive electrode active material, thereby helping to improve the relevant electrical performance of the battery.

The present application also provides a lithium-ion battery, which includes the above-mentioned positive electrode sheet, so the lithium-ion battery has excellent performance in terms of specific capacity and cycle performance.

The present application provides a positive electrode active material, which includes a lithium metal oxide represented by Formula 1 or Formula 2;
in an X-ray diffraction spectrum, the lithium metal oxide is a Cmca space group of a cubic lattice system, and has a 002 peak with a 2θ of 17.9° to 18.1°, and a 131 peak with a 2θ of 67.0° to 67.5°;

   Li_{n1-y1}Na_{y1}Co_{1-a1-b1}M1_{b1}M2ₐ₁O₂ Formula 1

   Li_{n2-y2-b2}Na_{y2}Co₁₋ₐ₂M1_{b2}M2ₐ₂O₂ Formula 2
in Formula 1, 0.6≤n1≤0.8, 0<y1≤0.05, 0<al<0.1, 0<b1≤0.1, 0<b1/1-a1-b1<0.1 ;
in Formula 2, 0.6≤n2≤0.8, 0<y2≤0.05, 0<a2<0.1, 0<b2<0.02,
where M1 is selected from at least one of Te, W, Al, B, P, and K; M2 is a dopant element.

In the positive electrode active material as described above, in Formula 1, M1 is selected from one of Al, W and/or Te, B and/or P;
in Formula 2, M1 is K.

In the positive electrode active material as described above, the positive electrode active material is composed of a core including the lithium metal oxide and a coating layer covering at least part of a surface of the core.

In the positive electrode active material as described above, when the positive electrode active material has a cut-off voltage of 3.0-3.6V and has a SOC of zero, 0.7≤n1, n2≤1.0.

In the positive electrode active material as described above, the positive electrode active material has a median particle size of 12µm to 20µm.

In the positive electrode active material as described above, a first-stage discharge capacity ratio of the positive electrode active material is C1/C0≥9%, and a second-stage discharge capacity ratio is C2/C0≥25%;
where C0 is a discharge capacity of a half-cell including the positive electrode active material when the half-cell is subjected to a discharge treatment at a voltage of 3.0 to 4.55 V; in the discharge treatment, a capacity released by the half-cell when the half-cell is discharged from an initial discharge voltage to 4.4V is defined as C1, and a capacity released by the half-cell when the half-cell is discharged from 3.8V to 3.7V is defined as C2.

In the positive electrode active material as described above, the 002 peak has a peak intensity of I1, the 131 peak has a peak intensity of I2, and I1/I2≥4.

The present application provides a positive electrode sheet, which includes the positive electrode active material according to any one of the above items.

In the positive electrode sheet as described above, the positive electrode sheet includes a positive electrode collector and a positive electrode active layer disposed on at least one surface of the positive electrode current collector, and the positive electrode active layer includes 70-99wt% of the positive electrode active material, 0.5-15wt% of a conductive agent, and 0.5-15wt% of a binder by mass percentage.

In the positive electrode sheet as described above, the positive electrode active layer includes 80-98wt% of the positive electrode active material, 1-10wt% of a conductive agent, and 1-1 Owt% of a binder by mass percentage.

This application provides a lithium-ion battery, where the lithium-ion battery includes the positive electrode sheet as described above.

In the lithium-ion battery as described above, a negative electrode sheet in the lithium-ion battery is a lithium-containing negative electrode sheet.

In the lithium-ion battery as described above, the negative electrode sheet is a lithium foil.

In the lithium-ion battery as described above, the negative electrode sheet includes a negative electrode current collector, a negative electrode active layer, and a lithium material layer, which are stacked with each other, where the negative electrode active layer is disposed on at least one surface of the negative electrode current collector, and the negative electrode active layer is close to the negative electrode current collector.

In the lithium-ion battery as described above, the lithium material layer is a lithium foil.

In the lithium-ion battery as described above, metallic lithium in the lithium material layer has a surface density of 0.09 mg/cm² to 3.5mg/cm².

In the lithium-ion battery as described above, the negative electrode active layer includes 70-99wt% of a negative electrode active material, 0.5-15wt% of a conductive agent, and 0.5-15wt% of a binder by mass percentage.

In the lithium-ion battery as described above, the negative electrode active layer includes 80-98wt% of a negative electrode active material, 1-10wt% of a conductive agent, and 1-10wt% of a binder by mass percentage.

The positive electrode active material of the present application has a special crystal phase structure and chemical composition. After the positive electrode active material is applied to a battery, the cycle performance and gram capacity of the battery are significantly improved. Even under high voltage conditions of 4.5V and above, the battery using the positive electrode active material can still maintain excellent performance in terms of related electrical properties, and the problem of structural collapse due to poor pressure resistance of the positive electrode active material will not occur.

### BRIEF DESCRIPTION OF DRAWINGS

FIG. 1 is a partial structural schematic diagram of a negative electrode sheet in a lithium-ion battery of an embodiment of the present invention.
FIG. 2 is an XRD image of a sample 1A# in Example 1A of the present invention.
FIG. 3 is an SEM image of a sample 1C# in Example 1C of the present invention.
FIG. 4 is an SEM image of a sample 3C# in Example 3C of the present invention.
FIG. 5 is a comparison curve of the cycle performance of a sample 1D# in Example 1D and a sample in Comparative Example 3 of the present invention.

### DESCRIPTION OF EMBODIMENTS

To make the objectives, technical solutions, and advantages of the present application clearer, the following clearly and comprehensively describes the technical solutions in embodiments of the present application in combination with the embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

In a first aspect, the present application provides a positive electrode active material, including a lithium metal oxide represented by Formula 1 or Formula 2;
in an X-ray diffraction spectrum, the lithium metal oxide is a Cmca space group of a cubic lattice system, and has a 002 peak with a 2θ of 17.9° to 18.1°, and a 131 peak with a 2θ of 67.0° to 67.5°;

   Li_{n1-y1}Na_{y1}Co_{1-a1-b1}M1_{b1}M2ₐ₁O₂ Formula 1

   Li_{n2-y2-b2}Na_{y2}Co₁₋ₐ₂M1_{b2}M2ₐ₂O₂ Formula 2
in Formula 1, 0.6≤n1≤0.8, 0<y1≤0.05, 0≤a1≤0.1, 0<b1≤0.1, 0<b1/1-a1-b1<0.1 ;
in Formula 2, 0.6≤n2≤0.8, 0<y2≤0.05, 0≤a1≤0.1, 0<b2≤0.02;
where M1 is selected from at least one of Te, W, Al, B, P, and K; M2 is a dopant element different from M1.

The lithium metal oxide mentioned above in the present application is a compound having a T2 phase stacking structure, specifically an oxide at least including lithium, sodium and M1. Furthermore, it may be doped with M2. The specific selection of M2 is not limited in the present application, and M2 may be a common doping element in the art. For example, it may be at least one of the elements Mg, Ti, Mn, Al, Te, W, Ni, Nb, Zr, La, F, Ce, Sr, Y, K, B and P.

There is no more limitation on yl, y2, al, a2, b1, b2, etc. within the above-mentioned limited range.

For example, in Formula 1, y1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04 or 0.05; a1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09 or 0.095; b1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09 or 0.095; b1/1 - a1-b1 is 0.005, 0.01, 0.02, 0.03, 0.04, 0.06, 0.08, 0.09, 0.095 or 0.1.

In Formula 2, y2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04, or 0.05; a2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09, or 0.095; b2 is 0.001, 0.002, 0.003, 0.004, 0.005, 0.006, 0.007, 0.008, 0.010, 0.012, 0.015, 0.018, 0.02; a2/1-a2 is 0.005, 0.01, 0.02, 0.03, 0.04, 0.06, 0.08, 0.09, 0.095 or 0.1.

It should be emphasized that the above-mentioned limitations on n1 and n2 refer to parameters related to the molar amount of lithium per unit mole of the lithium metal oxide in the positive electrode active material that has not undergone any charge and discharge treatments. It can be understood that when the positive electrode active material is applied to a lithium-ion battery for any charge and discharge treatments, the molar amount of lithium in a unit mole of the lithium metal oxide is different under different charge and discharge mechanisms and charge and discharge nodes.

According to the above solutions provided in the present application, compared with other positive electrode active materials, after the positive electrode active material including the lithium metal oxide is applied to a lithium-ion battery, the specific capacity and cycle performance of the lithium-ion battery are significantly improved, and the electrical performance of the lithium-ion battery will not deteriorate even under high voltage working conditions. Based on the analysis of this phenomenon, the inventors believe that the reasons may be as below. On the one hand, the doping of M1 helps to support the structure of the lithium metal oxide, so that the structural stability of the lithium metal oxide is improved to a certain extent. Therefore, whether in normal pressure or high pressure working environment, the structurally stable lithium metal oxide is more helpful to improve the efficiency of lithium ion deintercalation and promote the improvement of the cycle performance and specific capacity of the lithium-ion battery. On the other hand, the lithium metal oxide with the above-mentioned crystal characteristics has a more complete layered crystal phase structure, which can reduce or inhibit the occurrence of internal mixing and arrangement of the crystal phase, thereby enabling lithium ions to be smoothly deintercalated, especially showing multiple small charge and discharge platforms during high-voltage charging and discharging.

Furthermore, M1 in Formula 1 is selected from one of Al, W and/or Te, B and/or P (that is, M1 is selected from any one of Al, W, Te, a blend of W and Te, B, P, or a blend of B and P); M1 in Formula 2 is K. Specifically, when M1 in Formula 1 and M1 in Formula 2 are selected from different doping elements, there are certain differences in the degree of improvement of the electrical properties related to the lithium metal oxide.

In detail, when M1 in Formula 1 contains one of Al, Te and/or W, and P, it is concluded that Al atoms, Te atoms and/or W atoms, and P atoms can replace Co atoms in the lithium metal oxide, thereby improving the structural stability of the lithium metal oxide, allowing the lithium metal oxide to successfully achieve the deintercalation of lithium ions under high pressure without structural collapse of the lithium metal oxide, and improving the specific capacity and cycle performance of the battery.

When M1 in Formula 1 contains B atoms, the embedding of B atoms can replace Co atoms in the lithium metal oxide. This has a certain degree of fluxing effect, helping to make the lithium metal oxide become single crystal morphology (i.e., primary particles), thereby increasing the compaction density of the positive electrode sheet.

When M1 in Formula 2 is selected from K atoms, it is concluded that the radius of K atoms is larger than that of Li atoms and Na atoms, and K-atom space-occupying plays a supporting role in the lithium metal oxide, which is beneficial to the deintercalation of Li ions, thereby significantly improving the cycle performance and gram capacity. In addition, by controlling the doping amount of K, the electrochemical kinetics and rate performance during battery charging and discharging can be improved, and the polarization phenomenon can be reduced. This also has a positive promoting effect on the rate performance and first efficiency.

In addition to the positive promoting effect of the lithium metal oxide on the battery-related electrical properties, the performance of the battery will be further improved, when at least part of a surface of the lithium metal oxide is covered with a coating layer. By setting the coating layer, the positive electrode active material is a core-shell structure including a core of the lithium metal oxide and the coating layer covers the core. The coating layer helps to reduce or inhibit side reactions between the lithium metal oxide and an electrolyte. Even when the battery is operating under high voltage, a stable interface can still be formed between the positive electrode active material and the electrolyte, thereby improving the battery's cycle performance by avoiding excessive precipitation of metal ions in positive electrode active ions and avoiding liquid shortage. At the same time, the inhibition or reduction of side reactions can also reduce the gas production inside the battery, thereby ensuring the safety performance of the battery.

The present application does not limit the selection of the material of the coating layer, as long as it can inhibit side reactions and ensure the normal migration of lithium ions. In order to further improve the lithium ion conductivity, the coating layer can be made of a material such as carbon-containing compounds and fast ion conductors.

As mentioned above, in the lithium metal oxide that has not undergone any charge and discharge treatments, n1 and n2 are between 0.6 and 0.8. When a positive electrode sheet including the positive electrode active material and a lithium metal negative electrode sheet is assembled into a battery that is then charged and discharged, n1 and n2 of the lithium metal oxide are between 0.7~1.0 when the remaining power SOC of the battery is 0 (i.e., in a fully discharged state) and the discharge cut-off voltage is 3.0~3.6V. It should be noted that the changes in n1 and n2 refer to the number of charge and discharge cycles being within 10. Specifically, after the above mentioned lithium metal oxide is subjected to charge and discharge applications, its composition will change, especially the molar amount of lithium will be significantly increased. The reason is that the lithium metal oxide having the above mentioned crystal structure has some holes, so when it is subjected to charge and discharge treatment (such as formation), its holes can receive lithium atoms from the lithium negative electrode, thereby increasing the molar amount of lithium ions compared to the situation before charge and discharge applications. This characteristic helps to further improve the battery's cycle performance and specific capacity.

The detection of the above n1 and n2 can be performed by ICP. Specifically, the discharged battery is disassembled and the positive electrode sheet is taken out, then the positive electrode sheet is soaked in dimethyl carbonate (DMC) for 1-3 hours or rinsed with DMC, dried naturally in a drying room, then calcined at 300-600°C in a muffle furnace for 2-5 hours, and then sieved with 200 mesh to obtain a powder to be tested. Then ICP is used to detect metal elements in the powder to be tested, so as to calculate n1 and n2.

The positive electrode active material of the present application may be single crystal morphology or polycrystalline morphology, and the specific morphology is related to the selection and proportion of doping elements. Specifically, when it is polycrystalline morphology, it is a spherical or quasi-spherical particle; when it is single crystal morphology, it can be a whisker, a flake, or any other irregular shape.

Furthermore, the median particle size of the positive electrode active material in this application is 12-20µm, such as 3µm, 14µm, 15µm, 16µm, 17µm, 18µm, 19µm, or 20µm. The inventors found that when the median particle size of the positive electrode active material meets the above requirement, on the one hand, its corresponding specific surface area can meet the deintercalation of more lithium ions; on the other hand, the agglomeration phenomenon between positive electrode active materials is effectively controlled, so that they can be stably dispersed in a slurry during the slurrying process.

The inventors found that when the lithium metal oxide meets the doping and doping ratio of the specific element M1, the multiple discharge small platforms during the charge and discharge process thereof all show relatively excellent discharge capacity.

In a specific embodiment, the first-stage discharge capacity ratio of the positive electrode active material is C1/C0≥9%, and the second-stage discharge capacity ratio is C2/C0≥25%. Among them, C0 is a discharge capacity of a half-cell including the positive electrode active material when the half-cell is subjected to a discharge treatment at a voltage of 3.0 to 4.55V; in the discharge treatment, a capacity released when the half-cell is discharged from an initial discharge voltage to 4.4V is defined as C1, and a capacity released by the half-cell when the half-cell is discharged from 3.8V to 3.7V is defined as C2. Furthermore, C1/C0≥11%, and the second stage discharge capacity ratio is C2/C0≥28%.

It should be explained that the above discharging of capacity is carried out under a special discharge mechanism. Specifically, after the half-cell including a positive electrode sheet including the positive electrode active material and a lithium metal negative electrode is charged to a SOC of 100% (without any special limitation on the charging mechanism), the half-cell is subjected to a discharge treatment at 0.1C at 3.0-4.55V. The electric quantity released when the half-cell is discharged from 4.55V to 4.4V at 0.1C is C1, and the electric quantity released in the voltage reduction stage when the half-cell continues to be discharged from 3.8V to 3.7V is C2. When the half-cell continues to be discharged to 3.0V (SOC is 0 at this time), the total electric quantity released from the beginning of self-discharging is C0.

It is obvious that in the discharge treatment under a high voltage environment, both the discharge electric-quantity ratio in the first stage and the discharge capacity ratio in the second stage perform excellently. Therefore, the positive electrode active material including the lithium metal oxide of the present application has strong pressure resistance, and thus it can be subjected to a voltage-boosting treatment to increase the specific capacity of the battery.

In one embodiment, in the lithium metal oxide, the peak intensity of the 002 peak is I1, the peak intensity of the 131 peak is I2, and I1/I2≥4. At this time, the internal crystal structure of the lithium metal oxide is more perfect, which helps to improve the cycle performance of battery. Furthermore, I1/I2≥6.

The present application does not limit the preparation method of the above-mentioned lithium metal oxide. In a specific embodiment, the lithium metal oxide of the present application can be prepared by mixing a sodium metal oxide represented by Formula 1a or 2a with a lithium compound and performing ion treatment, where Formula 1a is Naₓ₁Co_{1-a1-b1}M1_{b1}M2ₐ₁O₂, and Formula 2a is Naₓ₂Co₁₋ₐ₂M1_{b2}M2ₐ₁O₂.

In Formula 1a, 0.68<x1<0.74, 0<b1<0.1, 0≤a<0.10, 0<b1/1-a1<0.05; in Formula 2a, 0.68<x2<0.74, 0<b2<0.02, 0≤a2<0.1.

The above-mentioned ion exchange treatment is a heat treatment process, specifically refers to mixing the sodium metal oxide and the lithium compound and then subjecting them to a heat treatment at 80°C to 300°C for no longer than 10 hours. After the ion exchange treatment, the ion-exchanged system is washed and dried to finally obtain a lithium metal oxide, where the drying temperature is 80-180°C and the drying time is at least 10 hours. There is no limitation on the equipment for ion exchange treatment and drying equipment. For example, the equipment for ion exchange treatment can be sealing container equipment with sealing function and stirring capability, such as wet coating reaction equipment, co-precipitation reaction equipment, etc.; the drying equipment can be a blast oven, vacuum drying oven, rotary kiln, disc dryer, oven, etc.

The above-mentioned lithium compound can be a commonly used lithium source compound in the field, for example, the lithium compound is one of lithium carbonate, lithium chloride, lithium bromide, lithium iodide, lithium nitrate, lithium hydroxide, and lithium fluoride. In the ion exchange treatment, the mass ratio of the lithium compound to the sodium metal oxide is not less than 1:1, preferably (1-3):1.

Furthermore, when it is necessary to prepare a positive electrode active material in which a coating layer covers outside the lithium metal oxide, a raw material of the coating layer needs to be added in addition to the raw materials including the sodium metal oxide and the lithium compound in the ion exchange process.

For the sodium metal compound shown in Formula 1a and Formula 2a, for example, it can be prepared by a method including the following process:
subjecting a cobalt source, a sodium source, an M1 source and an M2 source in a target ratio to mixing and calcination treatment to obtain the sodium metal compound represented by Formula 1a and Formula 2a.

Specifically, the calcination treatment is performed at a temperature of 700 to 900°C, for a time of 8 to 50 hours. The calcination treatment can be performed in an oxygen or air atmosphere. The equipment for calcination treatment may be, for example, a muffle furnace, a tunnel furnace, a roller kiln, a tubular furnace or other high-temperature sintering equipment.

The mixing of the above-mentioned sources can be performed by high-speed mixing equipment, sand milling equipment, ball milling equipment, plowshare mixing equipment, tilted mixing equipment, etc. It should be noted that if sand milling equipment or ball milling equipment is used and a solvent (water, ethanol or other solvent medium) is added during the ball milling or sand milling process, the mixed system needs to be dried after the mixing process is completed. Generally, the mixing time is not more than 4 hours.

The present application does not limit the specific selection of the cobalt source, sodium source, M1 source and M2 source. For example, the cobalt source is selected from one or more of cobaltous hydroxide, cobaltosic oxide, doped cobaltosic oxide, cobaltous oxide, cobalt oxyhydroxide, cobalt nitrate, cobalt sulfate, etc.; the sodium source is selected from one or more of sodium carbonate, sodium nitrate, sodium hydroxide, sodium bicarbonate, sodium sulfate, etc.; the M1 source can be any compound containing M1, such as an oxide of M1. When M1 is W, the M1 source is, for example, tungstic acid and/or sodium tungstate, etc.; when M1 is Te, the M1 source is, for example, telluric acid and/or sodium tellurate, etc.; when M1 is Al, the M1 source is, for example, aluminum sulfate, aluminum nitrate, aluminum hydroxide, etc.; when M1 is B, the M1 source is, for example, boric acid and/or sodium borate, etc.; when M1 is P, the M1 source is, for example, phosphoric acid and/or sodium phosphate, etc.; when M1 is K, the M1 source is, for example, one or more of potassium carbonate, potassium nitrate, potassium hydroxide, potassium bicarbonate, potassium sulfate, etc.; the M2 source can be any compound containing M2, such as an oxide of M2, such as one or more of basic magnesium carbonate, magnesium hydroxide, zirconium oxide, yttrium oxide, lanthanum oxide, lanthanum fluoride, nickel oxide, niobium oxide, etc.

A second aspect of the present application provides a positive electrode sheet, which includes the positive electrode active material described in the first aspect.

Based on the characteristics of the positive electrode active material in the first aspect, the positive electrode sheet of the present application helps to improve the cycle performance and specific capacity of lithium-ion batteries.

In a specific embodiment, the positive electrode sheet of the present application includes a positive electrode current collector and a positive electrode active layer disposed on at least one surface of the positive electrode current collector, and the positive electrode active layer includes the above-mentioned positive electrode active material.

It can be understood that in addition to the positive electrode active material, the positive electrode active layer includes a conductive agent and a binder. For example, the positive electrode active layer includes 70-99wt% of the positive electrode active material, 0.5-15wt% of a conductive agent, and 0.5-15wt% of a binder by mass percentage. Furthermore, it includes 80-98wt% of the positive electrode active material, 1-10wt% of a conductive agent, and 1-1 Owt% of a binder.

There is no particular preference for the conductive agent and the binder, and they may be conventionally selected in the art. For example, the conductive agent is selected from at least one of conductive carbon black, acetylene black, Ketjen black, conductive graphite, conductive carbon fiber, carbon nanotubes, single-walled carbon nanotubes, multi-arm carbon nanotubes, and carbon fibers, and the binder is selected from at least one of polyvinylidene fluoride (PVDF), polytetrafluoroethylene (PTFE), and polyacrylate lithium (PAALi).

Furthermore, in order to improve safety performance, a safety layer may be provided between the positive electrode active layer and the current collector. The material of the safety layer is generally a non-conductive safety material, such as iron-containing compounds (such as lithium iron phosphate, lithium phosphate, etc.), aluminum-containing compounds (such as ceramic aluminum oxide), etc. Of course, the safety layer also includes a binder, and the ratio of the binder to the safety material can be further determined according to specific needs.

The third aspect of the present application also provides a lithium-ion battery, which includes the above-mentioned positive electrode sheet and thus has outstanding performance in terms of cycle performance and specific capacity.

The present application does not limit the specific structure of the lithium-ion battery, for example, it can be a square shell battery, a cylindrical battery, etc.

According to the present application, the lithium-ion battery further includes a negative electrode sheet, a separator and an electrolyte.

For example, the electrolyte is a conventional electrolyte known in the art, including a lithium salt and a solvent, and the solvent contains ethylene carbonate (abbreviated as EC), diethyl carbonate (abbreviated as DEC), propylene carbonate (abbreviated as PC), and fluoroethylene carbonate (abbreviated as FEC). Furthermore, it also includes an additive represented by Formula T, whose mass percentage in the electrolyte is 0.1-10%,

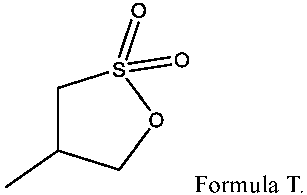

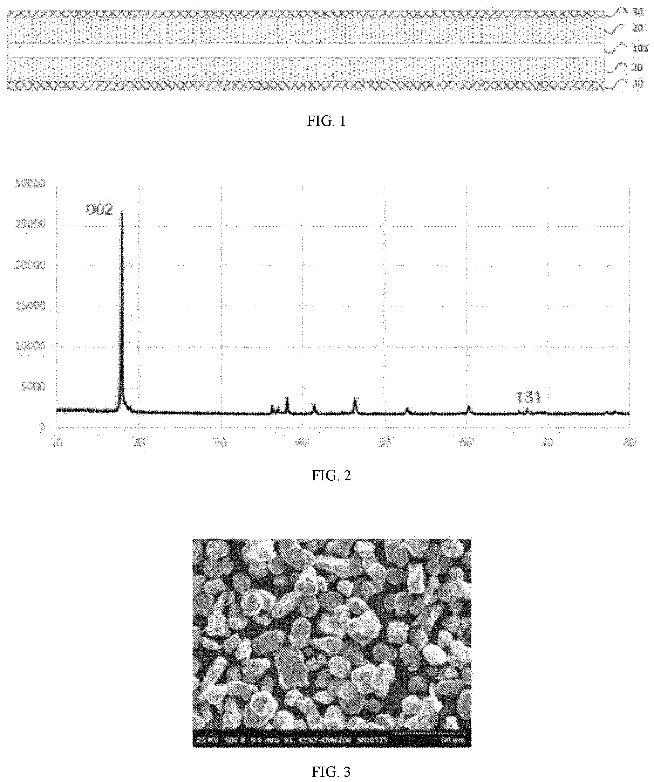

For example, the negative electrode sheet may be a negative electrode sheet containing lithium metal, for example, it may be a lithium foil or a negative electrode sheet as shown in FIG. 1. Specifically, the negative electrode sheet in FIG. 1 includes a negative electrode current collector 101, a negative electrode active layer 20 and a lithium material layer 30, which are stacked. The negative electrode sheet in FIG. 1 is in double-faced configuration, and of course, the negative electrode current collector may be provided on only one side thereof with a negative electrode active layer 20 and a lithium material layer 30. The lithium material layer is, for example, a lithium foil. Furthermore, the surface density of metallic lithium in the lithium material layer is 0.09 mg/cm²-3.5mg/cm². The negative electrode active layer includes a negative electrode active material, a conductive agent, and a binder.

In a specific embodiment, the negative electrode active layer includes 70-99wt% of a positive electrode active material, 0.5-15wt% of a conductive agent, and 0.5-15wt% of a binder by mass percentage. Furthermore, it includes 80-98wt% of a negative electrode active material, 1-10wt% of a conductive agent, and 1-10wt% of a binder. The negative electrode active material is selected from one or more of artificial graphite, natural graphite, hard carbon, mesophase carbon microbeads, lithium titanate, silicon carbon, and silicon (II) oxide.

For example, the separator is a material with polypropylene as the base material, or a gummed separator with ceramic coated on one side or both sides thereof.

The lithium-ion battery of the present application is applicable to a high-voltage system, specifically, a lithium-ion button battery including the above mentioned positive electrode sheet under the condition of >4.55V (relative to lithium) has a gram capacity of >225mAh/g and excellent cycling performance at >4.50V (corresponding to the above mentioned negative electrode sheet) at the same time.

Therefore, the lithium-ion battery of the present application has good cycle stability and high gram capacity at higher voltages such as 4.50V, which can meet the demand for lightweight and thin use of high-end digital products.

Hereinafter, the positive electrode active material of the present application is introduced through specific Examples.

### Example 1A

A preparation method of a positive electrode material provided in this example includes the following steps:
(1) weighing 36.56g of a sodium carbonate powder, 6.889g of a telluric acid powder, and 282.32g of a cobalt nitrate hexahydrate powder, putting them into a high-speed mixing device, setting a mixing program, mixing them at 300rpm for 3 minutes, at 500rpm for 5 minutes, at 1000rpm for 10 minutes, then taking out the mixture, and confirming that there is no small white spot of white sodium carbonate in the mixture, so as to confirm that the mixture is uniform;
(2) weighing about 30 g of the evenly mixed mixture and evenly putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 750°C, and after sintering, naturally cooling down to normal temperature and taking a sample out to obtain a sodium metal oxide Na_{0.69}Co_{0.97}Te_{0.03}O₂ detected with an Inductively Coupled Plasma Emission Spectrometer (ICP);
(3) preparing a reaction container, first weighing 10.49g of lithium hydroxide monohydrate and 17.24g of lithium nitrate particles and adding the two lithium compounds separately into the reaction container, then weighing 10g of the Na_{0.69}Co_{0.97}Te_{0.03}O₂ synthesized in step (2), adding it into the reaction container, mixing them preliminarily, then performing ion exchange at 280°C for 0.5 hours to obtain a crude product;
(4) subjecting the crude product to suction filtration washing with deionized water for three times, drying it at 90°C for 8 hours to obtain a sample 1A#.

ICP is used to detect and analyze 1A#, the specific results of which are shown in Table 1A.

FIG. 2 is an XRD diagram of the sample 1A# in Example 1A of the present application. As can be seen from FIG. 2, the lithium metal oxide prepared in this embodiment has a 002 peak and a 131 peak, it is a Cmca space group of a cubic lattice system and it has a T2 structure.

### Examples 2A-9A

The preparation methods of Examples 2A-9A are basically the same as that of Example 1A, and the difference only lies in the selection of different M1 (W source or Te source) and M2 sources, as well as the mass ratios between the individual metal sources, in step (1). The specific selection is shown in Table 1A, and samples 2A#-9A# are finally obtained. And their ICP detection and analysis results are shown in Table 1A.

### Example 10A

The preparation method of Example 10A is basically the same as that of Example 1A, and the difference only lies in that the step (1) is: weighing 36.56g of a sodium carbonate powder, 4.593g of a tellurium acid powder, and 79.30g of a compound of aluminum-doped cobaltosic oxide (Co_{0.95}Al_{0.03})₃O₄, putting them into a high-speed mixing device, setting a mixing program, mixing them at 300rpm for 3 minutes, at 500rpm for 5 minutes, at 1000rpm for 10 minutes, then taking out the mixture, and confirming that there is no small white spot of white sodium carbonate in the mixture, so as to confirm that the mixture is uniform.

The final sodium metal oxide obtained in the step 2) is Na_{0.69}Co_{0.95}Te_{0.02}Al_{0.03}O₂ and the sample 10A# is Li_{0.71}Na_{0.02}Co_{0.95}Te_{0.02}Al_{0.03}O₂.

### Example 11A

The preparation method of Example 11A is basically the same as that of Example 10A, and the difference only lies in that the step (3) is: preparing a reaction container, weighing 10.49g of lithium hydroxide monohydrate and 17.24g of lithium nitrate particles, adding the two lithium compounds separately into the reaction container, weighing 10g of Na_{0.69}Co_{0.95}Te_{0.02}Al_{0.03}O₂ synthesized in step (2), adding it into the reaction container, mixing them preliminarily, then performing ion exchange at 280°C for 1 hour to obtain a crude product; after the treatment in step (4), a sample 11A# Li_{0.71}Na_{0.02}Co_{0.95} Te_{0.02}Al_{0.03}O₂ is obtained.

### Example 12A

The preparation method of Example 12A is basically the same as that of Example 10A, and the difference only lies in that the step (3) is: preparing a reaction container, weighing 10.49g of lithium hydroxide monohydrate and 9.24g of lithium carbonate particles, adding the two lithium compounds separately into the reaction container, weighing 10g of Na_{0.69}Co_{0.95}Te_{0.02}Al_{0.03}O₂ synthesized in step (2), adding it into the reaction container, mixing them preliminarily, then performing ion exchange at 280°C for 1 hour to obtain a crude product; after the treatment in step (4), a sample 12A# Li_{0.71}Na_{0.0.02}Co_{0.95}Te_{0.02}Al_{0.03}O₂ is obtained.

### Example 13A

The preparation method of Example 13A is basically the same as that of Example 10A, and the difference only lies in that the step (3) is: preparing a reaction container, weighing 10.49g of lithium hydroxide monohydrate and 10.59g of lithium chloride particles, adding the two lithium compounds separately into the reaction container, weighing 10g of Na_{0.69}Co_{0.95}Te_{0.02}Al_{0.03}O₂ synthesized in step (2), adding it into the reaction container, mixing them preliminarily, then performing ion exchange at 280°C for 1 hour to obtain a crude product; after the treatment in step (4), a sample 13A# Li_{0.71}Na_{0.0.02}Co_{0.95} Te_{0.2}Al_{0.03}O₂ is obtained.

**Table 1A**

| Exa mpl e | Sodium metal oxide | Sample | Na₂CO₃ | Co (NO₃) ₂*6H₂O | H₆TeO₆ | WO₂ | Al₂O₃ |
|---|---|---|---|---|---|---|---|
| | | | g | g | g | g | g |
| 1A | Na_{0.69}Co_{0.97}Te_{0.03}O₂ | Li_{0.71}Na_{0.02}Co_{0.97}Te_{0.03}O₂ | 36.563 | 282.319 | 6.8892 | | |
| 2A | Na_{0.69}Co_{0.96}Te_{0.04}O₂ | Li_{0.71}Na_{0.02}Co_{0.96}Te_{0.04}O₂ | 36.563 | 279.408 | 9.1856 | | |
| 3A | Na_{0.69}Co_{0.97}W_{0.03}O₂ | Li_{0.71}Na_{0.02}Co_{0.97}W_{0.03}O₂ | 36.563 | 282.319 | | 6.47517 | |
| 4A | Na_{0.69}Co_{0.96}W_{0.04}O₂ | Li_{0.71}Na_{0.02}Co_{0.96}Wo_{0.4}O₂ | 36.563 | 279.408 | | 8.63356 | |
| 5A | Na_{0.69}Co_{0.96}Te_{0.02}W_{0.02}O₂ | Li_{0.71}Na_{0.02}Co_{0.96}Te_{0.02}W_{0.02}O₂ | 36.563 | 279.408 | 4.5928 | 4.31678 | |
| 6A | Na_{0.69}Co_{0.97}Te_{0.01}Te_{0.01}W_{0.02}O₂ | Li_{0.71}Na_{0.02}Co_{0.97}Te_{0.01}W_{0.02}O₂ | 36.563 | 282.319 | 2.2964 | 4.31678 | |
| 7A | Na_{0.69}Co_{0.97}Te_{0.02}W_{0.01}O₂ | Li_{0.71}Na_{0.02}Co_{0.97}Te_{0.02}W_{0.01}O₂ | 36.563 | 282.319 | 4.5928 | 2.15839 | |
| 8A | Na0_{.69}Co_{0.95}Te_{0.02}Al_{0.03}O₂ | Li_{0.71}Na_{0.02}Co_{0.95}Te_{0.02}Al_{0.03}O₂ | 36.563 | 276.498 | 4.5928 | | 1.5294 |
| 9A | Na_{0.69}Co_{0.95}Al_{0.03}W_{0.02}O₂ | Li_{0.71}Na_{0.02}Co_{0.95}Al_{0.03}W_{0.02}O₂ | 36.563 | 276.498 | | 4.31678 | 1.5294 |

### Example 1B

A preparation method of a positive electrode material provided in this example includes the following steps:
(1) weighing 36.56g of a sodium carbonate powder, 1.53g of a nano-alumina powder, 276.50g of a cobalt nitrate hexahydrate powder, and 0.806g of a nano-magnesium oxide powder, putting them into a high-speed mixing device, setting a mixing program, mixing them at 300 rpm for 3 minutes, at 500 rpm for 5 minutes, at 1000 rpm for 10 minutes, and then taking out the mixture, and confirming that there is no small white spot of white sodium carbonate in the mixture, so as to confirm that the mixture is uniform;
(2) weighing about 30g of the evenly mixed mixture and evenly putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 750°C, and after sintering, naturally cooling down to normal temperature and taking a sample out to obtain a sodium metal oxide Na_{0.69}Co_{0.95}Al_{0.03}Mg_{0.02}O₂ detected with an Inductively Coupled Plasma Emission Spectrometer (ICP);
(3) preparing a reaction container, first weighing 10.49g of lithium hydroxide monohydrate and 17.24g of lithium nitrate particles, and adding the two lithium compounds separately into the reaction container, then weighing 10g of the Na_{0.69}Co_{0.95}Al_{0.03}Mg_{0.02}O₂ synthesized in step (2), adding it into the reaction container, performing ion exchange at 280°C for 0.5 hours to obtain a sample.
(4) subjecting the crude product to suction filtration washing with deionized water for three times, drying it at 90°C for 8 hours to obtain a sample 1B#.

ICP is used to detect and analyze 1B#,the specific results of which are shown in Table 1B.

### Examples 2B-9B

The preparation methods of Examples 2B-9B are basically the same as that of Example 1B, and the difference only lies in the selection of different M2 sources as well as the mass ratios between the individual metal sources, in step (1). The specific selection is shown in Table 1B, and samples 2B#-9B# are finally obtained, and their ICP detection and analysis results are shown in Table 1B.

### Example 10B

The preparation method of Example 10B is basically the same as that of Example 1B, and the difference only lies in that the step (1) is: weighing 36.56g of a sodium carbonate powder, and 79.30g of a compound of aluminum-doped cobaltosic oxide (Co_{0.9}Al_{0.03})₃O₄, putting them into a high-speed mixing device, setting a mixing program, mixing them at 300 rpm for 3 minutes, at 500 rpm for 5 minutes, at 1000 rpm for 10 minutes, and then taking out the mixture, and confirming that there is no small white spot of white sodium carbonate in the mixture, so as to confirm that the mixture is uniform.

The final sodium metal oxide obtained in step (2) is Na_{0.69}Co_{0.97}Al_{0.03}O₂ and the sample 10B# is Li_{0.71}Na_{0.02}Co_{0.97}Al_{0.03}O₂.

### Example 11B

The preparation method of Example 11B is basically the same as that of Example 10B, and the difference only lies in that the ion exchange time in step (3) is 1 hour. The obtained sample 11B# is Li_{0.71}Na_{0.02}Co_{0.97}Al_{0.03}O₂.

### Example 12B

The preparation method of Example 12B is basically the same as that of Example 10B, and the difference only lies in that 9.24g of lithium carbonate particles are used to replace 17.24g of lithium nitrate particles in step (3). The obtained sample 12B# is Li_{0.71}Na_{0.02}Co_{0.97}Al_{0.03}O₂.

### Example 13B

The preparation method of Example 13B is basically the same as that of Example 10B, and the difference only lies in that 10.59g of lithium chloride particles are used to replace 17.24g of lithium nitrate particles in step (3). The obtained sample 13B# is Li_{0.71}Na_{0.02}Co_{0.97}Al_{0.03}O₂.

**Table 1B**

| Exam ple | Sodium metal oxide | Sample | Na₂CO₃ g | Al₂O₃ g | Co(NO₃)₂* 6H₂O g | MgO g | TiO₂ g | La₂O₃ g | Y₂O₃ g | ZrO₂ g | CeO₂ g |
|---|---|---|---|---|---|---|---|---|---|---|---|
| 1B | Na_{0.69}Co_{0.95}Al_{0.03}Mg_{0.02}O₂ | Li_{0.71}Na_{0.02}Co_{0.9 5}Al_{0.03}Mg_{0.02}O₂ | 36.5629 6 | 1.529 4 | 276.4975 | 0.8061 | | | | | |
| 2B | Na_{0.69}Co_{0.94}Al_{0. 04}Mg_{0.02}O₂ | Li_{0.71}Na_{0.02}Co_{0.9 4}Al_{0.04}Mg_{0.02}O₂ | 36.5629 6 | 2.039 2 | 273.587 | 0.8061 | | | | | |
| 3B | Na_{0.69}Co_{0.96}Al_{0. 0.2}Mg_{0.02}O₂ | Li_{0.71}Na_{0.02}Co_{0.9 6}Al_{0.02}Mg_{0.02}O₂ | 36.5629 6 | 1.019 6 | 279.408 | 0.8061 | | | | | |
| 4B | Na_{0.69}Co_{0.97}Al_{0. 03}O₂ | Li_{0.71}Na_{0.02}Co_{0.9 7}Al_{0.03}O₂ | 36.5629 6 | 1.529 4 | 282.3185 | | | | | | |
| 5B | Na_{0.69}Co_{0.95}Al_{0. 03}Ti_{0.02}O₂ | Li_{0.71}Na_{0.02}Co_{0.9 5}Al_{0.03}Ti_{0.02}O₂ | 36.5629 6 | 1.529 4 | 276.4975 | | 1.59 734 | | | | |
| 6B | Na_{0.69}Co_{0.95}Al_{0. 03}Zr_{0.02}O₂ | Li_{0.71}Na_{0.02}Co_{0.9 5}Al_{0.03}Zr_{0.02}O₂ | 36.5629 6 | 1.529 4 | 276.4975 | | | | | 2.464 4 | |
| 7B | Na_{0.69}Co_{0.95}Al_{0. 03}Y_{0.02}O₂ | Li_{0.71}Na_{0.02}Co_{0.9 5}Al_{0.03}Y_{0.02}O₂ | 36.5629 6 | 1.529 4 | 276.4975 | | | | 2.25 81 | | |
| 8B | Na_{0.69}Co_{0.95}Al_{0. 03}La_{0.02}O₂ | Li_{0.71}Na_{0.02}Co_{0.9 5}Alo.₀₃La_{0.02}O₂ | 36.5629 6 | 1.529 4 | 276.4975 | | | 3.258 09 | | | |
| 9B | Na_{0.69}Co_{0.95}Al_{0. 03}Ce_{0.02}O₂ | Li_{0.71}Na_{0.02}Co_{0.9 5}Al_{0.03}Ce_{0.02}O₂ | 36.5629 6 | 1.529 4 | 276.4975 | | | | | | 5.821 |

### Example 1C

A preparation method of a positive electrode material provided in this example includes the following steps:
(1) weighing 36.56g of a sodium carbonate powder, 1.854g of a boric acid powder, and 282.32g of a cobalt nitrate hexahydrate powder, putting them into a high-speed mixing device, setting a mixing program, mixing them at 300 rpm for 3 minutes, at 500 rpm for 5 minutes, at 1000 rpm for 10 minutes, and then taking out the mixture, and confirming that there is no small white spot of white sodium carbonate in the mixture, so as to confirm that the mixture is uniform;
(2) weighing about 30g of the evenly mixed mixture and evenly putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 750°C, and after sintering, naturally cooling down to normal temperature and taking a sample out to obtain a sodium metal oxide Na_{0.69}Co_{0.97}B_{0.03}O₂ detected with an Inductively Coupled Plasma Emission Spectrometer (ICP);
(3) preparing a reaction container, first weighing 10.49g of lithium hydroxide monohydrate and 17.24g of lithium nitrate particles and adding the two lithium compounds separately into the reaction container, then weighing 10g of the Na_{0.69}Co_{0.97}B_{0.03}O₂ synthesized in step (2), adding it into the reaction container, mixing them preliminarily, performing ion exchange at 280°C for 0.5 hours to obtain a crude product;
(4) subjecting the crude product to suction filtration washing with deionized water for three times, drying it at 90°C for 8 hours to obtain a sample 1C#.

ICP is used to detect and analyze 1C#, the specific results of which are shown in Table 1C.

FIG. 3 is a SEM image of the sample 1C# in Example 1C of the present application.

### Examples 2C-9C

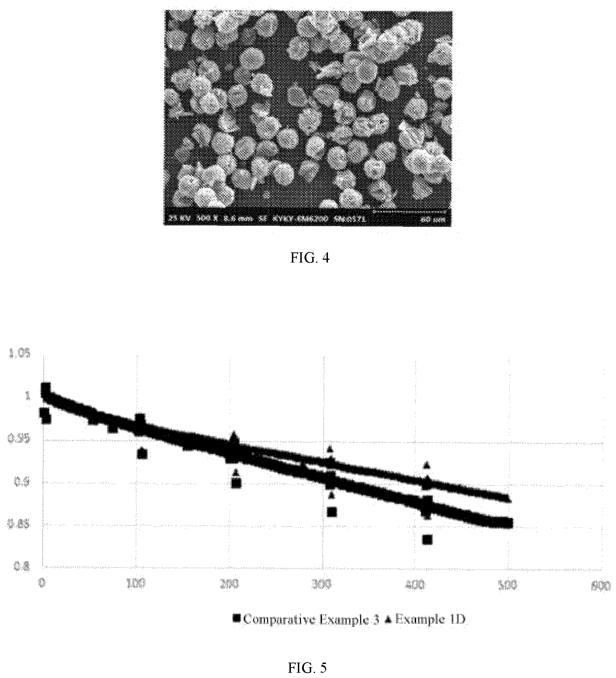

The preparation methods of Examples 2C-9C are basically the same as that of Example 1C, and the difference only lies in the selection of different M1 (B source or P source) and M2 sources, as well as the mass ratios between the individual metal sources, in step (1). The specific selection is shown in Table 1C, and the samples 2C#-9C# are finally obtained, and their ICP detection and analysis results are shown in Table 1C. FIG. 4 is a SEM image of the sample 3C# in Example 3C of the present application.

### Example 10C

The preparation method of Example 10C is basically the same as that of Example 1C, and the difference only lies in that the step (1) is: weighing 36.56g of a sodium carbonate powder, 1.236g of a boric acid powder, and 79.30g of a compound of aluminum-doped cobaltosic oxide (Co_{0.95}Al_{0.03})₃O₄, putting them into a high-speed mixing device, setting a mixing program, mixing them at 300 rpm for 3 minutes, at 500 rpm for 5 minutes, at 1000 rpm for 10 minutes, and then taking out the mixture, and confirming that there is no small white spot of white sodium carbonate in the mixture, so as to confirm that the mixture is uniform.

The final sodium metal oxide obtained in step 2) is Na_{0.69}Co_{0.95}B_{0.02}Al_{0.03}O₂ and the sample 10C# is Li_{0.71}Na_{0.02}Co_{0.95} B_{0.02}Al_{0.03}O₂.

### Example 11C

The preparation method of Example 11C is basically the same as that of Example 10C, and the difference only lies in that the ion exchange time in step (3) is 1 hour. The obtained sample 11C# is Li_{0.71}Na_{0.02}Co_{0.95}B_{0.02}Al_{0.03}O₂.

### Example 12C

The preparation method of Example 12C is basically the same as that of Example 10C, and the difference only lies in that 9.24 g of lithium carbonate particles are used to replace 17.24 g of lithium nitrate particles in step (3). The obtained sample 12C# is Li_{0.71}Na_{0.02}Co_{0.95} B_{0.02}Al_{0.03}O₂.

### Example 13C

The preparation method of Example 13C is basically the same as that of Example 10C, and the difference only lies in that 10.59g of lithium chloride particles are used to replace 17.24g of lithium nitrate particles in step (3). The obtained sample 13C# is Li_{0.71}Na_{0.02}Co_{0.95} B_{0.02}Al_{0.03}O₂.

**Table 1C**

| Example | Sodium metal oxide | Sample | Na₂CO₃ | Co(NO₃)₂* 6H₂O | H₃BO₃ | H₃PO₄ | Al₂O₃ |
|---|---|---|---|---|---|---|---|
| | | | g | g | g | g | g |
| 1C | Na_{0.69}Co_{0.97}B_{0.03}O₂ | Li_{0.71}Na_{0.02}Co_{0.97}B_{0.03}O₂ | 36.563 | 282.319 | 1.854 | | |
| 2C | Na_{0.60}Co_{0.96}B_{0.04}O₂ | Li_{0.71}Na_{0.02}Co_{0.96}B_{0.04}O₂ | 36.563 | 279.408 | 2.472 | | |
| 3C | Na_{0.69}Co_{0.97}P_{0.03}O₂ | Li_{0.71}Na_{0.02}Co_{0.97}P_{0.03}O₂ | 36.563 | 282.319 | | 2.940 | |
| 4C | Na_{0.69}Co_{0.96}P_{0.04}O₂ | Li_{0.71}Na_{0.02}Co_{0.96}P_{0.04}O₂ | 36.563 | 279.408 | | 3.920 | |
| 5C | Na_{0.69}Co_{0.96}B_{0.02}P_{0.}0₂O₂ | Li_{0.71}Na_{0.02}Co_{0.96}B_{0.02}P_{0.02}O₂ | 36.563 | 279.408 | 1.236 | 1.960 | |
| 6C | Na_{0.60}Co_{0.97}B_{0.01}P_{0.}0₂O₂ | Li_{0.71}Na_{0.02}Co_{0.97}B_{0.01}P_{0.02}O₂ | 36.563 | 282.319 | 0.618 | 1.960 | |
| 7C | Na_{0.69}Co_{0.97}B_{0.02}P_{0.01}O₂ | Li_{0.71}Na_{0.02}Co_{0.97}B_{0.02}P_{0.01}O₂ | 36.563 | 282.319 | 1.236 | 0.980 | |
| 8C | Na_{0.69}Co_{0.95}B_{0.02}A_{l0.03}O₂ | Li_{0.71}Na_{0.02}Co_{0.95}B_{0.02}Al_{0.03}O₂ | 36.563 | 276.498 | 1.236 | | 1.529 |
| 9C | Na_{0.69}Co_{0.95}Al_{0.03}P_{0.02}O₂ | Li_{0.71}Na_{0.02}Co_{0.95}Al_{0.03}P_{0.02}O₂ | 36.563 | 276.498 | | 1.960 | 1.529 |

### Example 1D

A preparation method of a positive electrode material provided in this example includes the following steps:
(1) weighing 36.56g of a sodium carbonate powder, 0.21g of a potassium carbonate powder, 282.31g of a cobalt nitrate hexahydrate powder, and 1.21g of a magnesium oxide nanopowder, putting them into a high-speed mixing device, setting a mixing program, mixing them at 300 rpm for 3 minutes, at 500 rpm for 5 minutes, at 1000 rpm for 10 minutes, and then taking out the mixture, and confirming that there is no small white spot of white sodium carbonate in the mixture, so as to confirm that the mixture is uniform;
(2) weighing about 30g of the evenly mixed mixture and evenly putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 750°C, and after sintering, naturally cooling down to normal temperature and taking a sample out to obtain a sodium metal oxide Na_{0.69}K_{0.003}Co_{0.97}Mg_{0.03}O₂ detected with an Inductively Coupled Plasma Emission Spectrometer (ICP);
(3) preparing a reaction container, first weighing 10.49g of lithium hydroxide monohydrate and 17.24g of lithium nitrate particles and adding the two lithium compounds separately into the reaction container, then weighing 10g of the Na_{0.69}K_{0.003}Co_{0.97}Mg_{0.03}O₂ synthesized in step (2), adding it into the reaction container, mixing them preliminarily, performing ion exchange at 280°C for 0.5 hours to obtain a sample;
(4) subjecting the crude product to suction filtration washing with deionized water for three times, drying it at 90°C for 8 hours to obtain a sample 1D#.

ICP is used to detect and analyze 1D#, the specific results of which are shown in Table 1D.

### Examples 2D-9D

The preparation methods of Examples 2D-9D are basically the same as that of Example 1D, and the difference only lies in the selection of different M2 sources, as well as the mass ratios between the individual metal sources, in step (1). The specific selection is shown in Table 1D, and the samples 2D#-9D# are finally obtained, and their ICP detection and analysis results are shown in Table 1D.

### Example 10D

The preparation method of Example 10D is basically the same as that of Example 1D, and the difference only lies in that the ion exchange time in step (3) is 1 hour. The obtained sample 10D# is Li_{0.71}Na_{0.02}K_{0.003}Co_{0.97}Mg_{0.03}O₂.

### Example 11D

The preparation method of Example 11D is basically the same as that of Example 1D, and the difference only lies in that the ion exchange temperature in step (3) is 260°C. The obtained sample 10D# is Li_{0.71}Na_{0.02}K_{0.003}Co_{0.97}Mg_{0.03}O₂.

### Example 12D

The preparation method of Example 12D is basically the same as that of Example 1D, and the difference only lies in that 9.24g of lithium carbonate particles are used to replace 17.24g of lithium nitrate particles in step (3). The obtained sample 12D# is Li_{0.71}Na_{0.02}K_{0.003}Co_{0.97}Mg_{0.03}O₂.

### Example 13D

The preparation method of Example 13D is basically the same as that of Example 1D, and the difference only lies in that 10.59g of lithium chloride particles are used to replace 17.24g of lithium nitrate particles in step (3). The obtained sample 13D# is Li_{0.71}Na_{0.02}K_{0.003}Co_{0.97}Mg_{0.03}O₂.

**Table 1D**

| Example | Sodium metal oxide | Sample | Na₂CO₃ | K₂CO₃ | Co(NO₃)₂*6 H₂O | MgO | TiO₂ | La₂O₃ | Y₂O₃ |
|---|---|---|---|---|---|---|---|---|---|
| | | | g | g | g | g | g | g | g |
| 1D | Na_{0.69}K_{0.003}C o_{0.97}Mg_{0.03}O₂ | Li_{0.71}Na_{0.02}K_{0.003}Co_{0 .97}Mg_{0.03}O₂ | 36.56296 | 0.207309 | 282.3185 | 1.20915 | | | |
| 2D | Na_{0.69}K_{0.0015} Co_{0.97}Mg_{0.03} O₂ | Li_{0.71}Na_{0.02}K_{0.0015}Co _{0.97}Mg_{0.03}O₂ | 36.56296 | 0.103655 | 282.3185 | 1.20915 | | | |
| 3D | Na_{0.69}K_{0.005}C o_{0.97}Mg_{0.03}O₂ | Li_{0.71}Na_{0.02}K_{0.005}Co_{0 .97}Mg_{0.03}O₂ | 36.56296 | 0.345515 | 282.3185 | 1.20915 | | | |
| 4D | Na_{0.69}K_{0.003}C o_{0.97}Ti_{0.03}O₂ | Li_{0.71}Na_{0.02}K_{0.003}Co_{0 .97}Ti_{0.03}O₂ | 36.56296 | 0.207309 | 282.3185 | | 2.396 01 | | |
| 5D | Na_{0.69}K_{0.003}C o_{0.97}Y_{0.03}O₂ | Li_{0.71}Na_{0.02}K_{0.003}Co_{0 .97}Y_{0.03}O₂ | 36.56296 | 0.207309 | 282.3185 | | | | 3.387 15 |
| 6D | Na_{0.69}K_{0.003}C o_{0.97}La_{0.03}O₂ | Li_{0.71}Na_{0.02}K_{0.003}Co_{0 .97}La_{0.03}O₂ | 36.56296 | 0.207309 | 282.3185 | | | 4.887 135 | |
| 7D | Na_{0.69}K_{0.003}Co_{0. 95}Y_{0.03}La₀₂O₂ | Li_{0.71}Na_{0.02}K_{0.003}Co_{0 .95}Y_{0.03}La_{0.02}O₂ | 36.56296 | 0.207309 | 276.4975 | | | 3.258 09 | 3.387 15 |
| 8D | Na_{0.69}K_{0.003}C o_{0.95}Mg_{0.03}La _{0.02}O₂ | Li_{0.71}Na_{0.02}K_{0.003}Co_{0 .95}Mg_{0.03}La_{0.02}O₂ | 36.56296 | 0.207309 | 276.4975 | 1.20915 | | 3.258 09 | |
| 9D | Na_{0.69}K_{0.003}C o_{0.95}Mg_{0.03}Ti _{0.02}O₂ | Li_{0.71}Na_{0.02}K_{0.003}Co_{0 .95}Mg_{0.03}Ti_{0.02}O₂ | 36.56296 | 0.207309 | 276.4975 | 1.20915 | 1.597 34 | | |

The unfilled parts in Tables 1A-1D represent that the raw materials of these Examples do not include compounds.

### Comparative Example 1

The chemical composition of a positive electrode material provided by this Comparative Example is Li_{1.0026}CoO₂;

The preparation method thereof includes the following steps:
(1) weighing lithium carbonate and commercially available conventional undoped spherical Co₃O₄ particles in a molar ratio of Li:Co=100.26:100, putting them into the same high-speed mixing device as used in the Examples, setting a mixing program, mixing them at 300 rpm for 3 minutes, at 500 rpm for 5 minutes, and at 1000 rpm for 10 minutes , and then taking out the mixture, confirming that there is no small white spot of white lithium carbonate in the mixture, so as to confirm that the mixture is uniform;
(2) weighing 30g of the evenly mixed mixture and putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 1050°C, and after sintering, naturally cooling down to normal temperature and taking a sample out, to obtain a sintered crude product;
(3) Crushing and grinding the sintered crude product, and then putting the powder into the muffle furnace for sintering at 950°C for 8 hours; crushing the sintered product to obtain Li_{1.0026}CoO₂ with D50 of 15.2 µm and without any doping and coating.

### Comparative Example 2

The positive electrode material provided by this Comparative Example is a conventional high-voltage doped and coated lithium cobaltate positive electrode material, with a chemical composition of Li_{1.0027} Co_{0.97}Al_{0.03}O₂;

The preparation method of the positive electrode material includes the following steps:
(1) weighing lithium carbonate, and commercially available conventional spherical Co₃O₄ particles doped with Al in a molar ratio of Li:Co=100.27:97, with a stoichiometric ratio of the Co₃O₄ particles being Co:Al=97:3.0, putting them into the same high-speed mixing device as used in the Examples, setting a mixing program, mixing them at 300 rpm for 3 minutes, at 500 rpm for 5 minutes, and at 1000 rpm for 10 minutes , and then taking out the mixture, confirming that there is no small white spot of white lithium carbonate in the mixture, so as to confirm that the mixture is uniform;
(2) weighing 30g of the evenly mixed mixture and putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 1030°C, and sintering, then naturally cooling down to normal temperature and taking a sample out, to obtain Li_{1.0027} Co_{0.97}Al_{0.03}O₂.

### Comparative Example 3

The preparation method of Comparative Example 3 is basically the same as that of Example 1A, and the difference only lies in that step (1) is: weighing 36.56g of a sodium carbonate powder and 291.05g of a cobalt nitrate hexahydrate powder, without adding any additives, putting them into a high-speed mixing device, setting a mixing program, mixing them at 300 rpm for 3 minutes, at 500 rpm for 5 minutes, and at 1000 rpm for 10 minutes, and then taking out the mixture, and confirming that there is no small white spot of white lithium carbonate in the mixture, so as to confirm that the mixture is uniform.

After the treatments in steps (2) to (4), a product having a T2 structure for Comparative Example 3 is obtained with a chemical formula of Li_{0.71}Na_{0.02}CoO₂.

### Comparative Example 4

The positive electrode material provided by this Comparative Example is conventional high-voltage doped and coated lithium cobaltate positive electrode material, with a chemical composition of Li_{1.0027} Co_{0.947}K_{0.003}Mg_{0.03}La_{0.02}O₂.

The preparation method thereof includes the following steps:
(1) weighing lithium carbonate, commercially available conventional spherical Co₃O₄ particles doped with Mg and La, and magnesium oxide particles in a molar ratio of Li:Co:K= 100.27:94.7:0.3, with a stoichiometric ratio of the Co₃O₄ particles being Co:Mg:La= 94.7:3.0:2, putting the three substances into the same high-speed mixing device as used in the Examples, setting a mixing program, mixing them at 300 rpm for 3 minutes, at 500 rpm for 5 minutes, and at 1000 rpm for 10 minutes, and then taking out the mixture, confirming that there is no small white spot of white lithium carbonate in the mixture, so as to confirm that the mixture is uniform;
(2) weighing 30g of the evenly mixed mixture and putting it into a ceramic crucible, conducting high-temperature sintering using a well muffle furnace with device model of VBF-1200X and with a sintering temperature-rise curve of 5°C/min, conducting constant temperature sintering for 10 hours when the temperature rises to 1030°C, and sintering, then naturally cooling down to normal temperature and taking a sample out, to obtain a product Li_{1.0027} Co_{0.947}K_{0.003}Mg_{0.03}La_{0.02}O₂ for Comparative Example 4.

### Test Example 1

XRD diffraction is performed on the products of all the Examples and Comparative Examples, and the results are shown in Tables 2A to 2D.

### Test Example 2

After the products in all the Examples and Comparative Examples are made into positive electrode sheets, they are assembled with negative electrode sheets, electrolytes and separators according to the following method to obtain lithium-ion batteries. The method includes following steps:
1) mixing the positive electrode active material in the Examples and the Comparative Examples with conductive carbon black and PVDF in a weight ratio of 96%:2%:2% respectively to obtain a positive electrode slurry through dispersion, coating the slurry to an aluminum foil current collector and rolling to obtain a positive electrode sheet;
2) mixing artificial graphite, styrene-butadiene rubber (SBR), sodium carboxymethyl cellulose, and conductive carbon black in a weight ratio of 94%:3%:2%:1%, dispersing the mixture in water to obtain a negative electrode slurry after dual planet mixing, coating the slurry to an copper collector, then rolling and drying;
   stacking a lithium material layer on a surface of a negative electrode active layer by rolling, with the lithium material layer being a lithium foil and the surface density of metallic lithium being1.0mg/cm², so as to finally obtain a negative electrode sheet containing lithium metal;
3) assembling the positive electrode sheet, negative electrode sheet, and separator into a lithium-ion battery, and injecting a non-aqueous electrolyte into the battery.

Where the electrolyte is a conventional electrolyte known in the art, which is formed by mixing ethylene carbonate (abbreviated as EC), diethyl carbonate (abbreviated as DEC), and propylene carbonate (abbreviated as PC) in a mass ratio of 2:5:3, and then adding fluoroethylene carbonate (abbreviated as FEC) at 5% of the total mass of the electrolyte, lithium hexafluorophosphate (abbreviated as LiPF6) at 13% of the total mass of the electrolyte, and an additive represented by formula T with an additive content of 2% of the total content of the electrolyte.

The capacity retention rate of each lithium-ion battery obtained is tested. The specific test method is charging to 4.50V at a constant current with a charging ratio of 1C at 25°C, then charging to 4.50V at a constant voltage with a charging ratio of 0.05C, and then discharging to 3.0V with a discharging ratio of 1C, and repeating this charging and discharging cycle for 500 times, and measuring the discharging capacity at the first cycle and at the 500th cycle, and then calculating the capacity retention rate after cycles of 500 times according to the following formula. The results are shown in Tables 2A-2D. Capacity retention rate Q = (discharge capacity at the 500th cycle) / (discharge capacity at the first cycle) * 100%

FIG. 5 is a comparative curve of the cycling performance of the sample 1D# in Example 1D and the sample in Comparative Example 3 of the present application.

### Test Example 3

After the products in all the Examples and Comparative Examples are made into positive electrode sheets, they are assembled with negative electrode sheets, electrolytes and separators according to the following method to obtain button batteries. The method includes following steps:
mixing the positive electrode active material in each of the Examples and the Comparative Examples with conductive carbon black (SP) and PVDF in a weight ratio of 80%:10%:10% respectively to obtain a positive electrode slurry through dispersion; coating the slurry to an aluminum foil collector and rolling to obtain a positive electrode sheet; then punching, by using a mold, the positive electrode sheet into to a 12mm-diameter small round disc; drying and weighing it; assembling, by using a 2025 button battery shell, it with a Li metal disc as the negative electrode and a conventional high-voltage lithium cobaltate electrolyte into a button battery in a glove box under an Ar protective atmosphere.

Each button battery is left standing for 4 hours under conventional conditions, then the first charge and discharge capacity test is carried out. The test conditions are: charging at 0.1C to 4.55V, constant-voltage charging to 0.025C for cut-off, and leaving it standing for 3 minutes, and then discharging at 0.1C to 3.0V. During the discharging process, a discharging capacity C1 at 4.4-4.55V, a discharge capacity C2 at 3.7-3.8V, a first discharging full capacity C0, and a first charging capacity are recorded respectively, and the first efficiency, the first-stage discharging capacity ratio C1/C0, and the second-stage discharging capacity ratio C2/C0 are calculated. The results are shown in Tables 2A~2D.

### Test Example 4

The products in all the Examples and Comparative Examples are assembled into lithium-ion batteries according to the method in Test Example 2. Then each lithium-ion battery is subjected to a chemical formation process, and then discharged at a current of 1/10 of a rated capacity to 3.0V, and then is subjected to voltage test. It is found that its voltage is 3.0~3.6V. Then, the lithium-ion battery is disassembled, and the positive electrode sheet is taken out and soaked in dimethyl carbonate (DMC) for 3 hours or rinsed with DMC, dried naturally in a drying room, and then placed in a muffle furnace for roasting at 300°C for 3 hours, then sieved through a 200-mesh sieve, so as to obtain a sample powder. ICP is used to test the content of each element in the sample powder, and n is calculated based on the detection values of elements Li, Na and, etc. The results are shown in Tables 2A~2D.

**Table 2A**

| | 002 peak 2θ value (°) | 131 peak 2θ value (°) | I1/I2 ratio | Particle Size D50 (um) | C0 (mAh/g ) | First-time efficiency | C1/C0 | C2/C0 | Q | n value |
|---|---|---|---|---|---|---|---|---|---|---|
| Example 1A | 18.016 | 67.4488 | 9.48 | 15.6 | 233.8 | 124.81% | 12.13 % | 30.78 % | 91.27 % | 0.873 |
| Example 2A | 17.989 7 | 67.4619 | 10.1 5 | 16.0 | 232.3 | 125.41% | 11.97 % | 30.36 % | 91.01 % | 0.873 4 |
| Example 3A | 18.016 | 67.4488 | 8.79 | 14.9 | 235.1 | 126.33% | 12.84 % | 31.44 % | 91.87 % | 0.868 |
| Example 4A | 17.989 7 | 67.4094 | 7.99 | 15.3 | 233.6 | 125.22% | 12.04 % | 30.35 % | 92.14 % | 0.871 |
| Example 5A | 18.016 | 67.4619 | 9.42 | 16.1 | 233 | 125.35% | 12.43 % | 30.70 % | 91.98 % | 0.879 3 |
| Example 6A | 18.016 | 67.4488 | 8.95 | 16.0 | 232.7 | 124.87% | 12.56 % | 29.52 % | 91.01 % | 0.86 |
| Example 7A | 17.989 7 | 67.4225 | 8.29 | 15.8 | 232.4 | 125.47% | 12.76 % | 29.82 % | 92.57 % | 0.862 3 |
| Example 8A | 17.989 7 | 67.4488 | 9.01 | 14.9 | 232.2 | 124.76% | 12.95 % | 29.83 % | 91.16 % | 0.88 |
| Example 9A | 18.016 | 67.4094 | 9.72 | 15.3 | 232.5 | 125.06% | 12.66 % | 30.08 % | 92.32 % | 0.859 |
| Example 10A | 18.016 | 67.4619 | 10.0 8 | 16.0 | 236.84 | 125.49% | 13.13 % | 30.38 % | 92.09 % | 0.861 3 |
| Example 11A | 17.989 7 | 67.4225 | 9.84 | 15.6 | 237.14 | 125.04% | 12.98 % | 30.51 % | 92.89 % | 0.862 |
| Example 12A | 18.002 | 67.4488 | 7.83 | 14.9 | 237.44 | 125.60% | 12.19 % | 29.65 % | 92.73 % | 0.864 1 |
| Example 13A | 18.002 | 67.4094 | 10.3 9 | 15.1 | 237.64 | 125.91% | 12.88 % | 30.69 % | 92.87 % | 0.872 3 |
| Comparative Example 1 | / | / | / | 15.9 | 201.7 | 95.40% | 6.58% | 0.48% | 45.34 % | / |
| Comparative Example 2 | / | / | / | 16.0 | 196.7 | 94.23% | 4.71% | 0.52% | 74.55 % | / |
| Comparative Example 3 | 18.016 | 67.4225 | 3.38 | 15.7 | 228.8 | 125.44% | 11.84 % | 29.69 % | 85.73 % | 0.834 3 |

**Table 2B**

| | 002 peak 2θ value (°) | 131 peak 2θ value (°) | I1/I2 ratio | Particle Size D50 (um) | C0 (mAh/g) | First-time efficienc y | C1/C0 | C2/C0 | Q | n value |
|---|---|---|---|---|---|---|---|---|---|---|
| Example 1B | 17.9897 | 67.4619 | 8.74 | 16.1 | 229.3 | 124.62% | 11.18 % | 29.85 % | 88.62 % | 0.874 |
| Example 2B | 17.9766 | 67.4488 | 9.08 | 14.7 | 230.8 | 125.22% | 11.02 % | 29.43 % | 89.26 % | 0.869 8 |
| Example 3B | 18.0160 | 67.4488 | 9.75 | 14.8 | 228.6 | 126.16% | 12.15 % | 30.76 % | 88.11 % | 0.878 |
| Example 4B | 18.0160 | 67.4619 | 8.39 | 15.4 | 229.1 | 125.08% | 11.38 % | 29.67 % | 89.99 % | 0.862 3 |
| Example 5B | 17.9897 | 67.4094 | 9.11 | 15.6 | 228.6 | 125.21% | 11.77 % | 29.96 % | 89.45 % | 0.882 |
| Example 6B | 17.9766 | 67.4225 | 8.78 | 16.0 | 228.3 | 124.78% | 11.90 % | 28.78 % | 88.26 % | 0.859 3 |
| Example 7B | 18.0160 | 67.4356 | 9.65 | 16.0 | 227.8 | 125.38% | 11.72 % | 28.86 % | 89.82 % | 0.861 4 |
| Example 8B | 18.0160 | 67.4225 | 8.86 | 15.8 | 227.6 | 124.68% | 11.91 % | 29.09 % | 87.41 % | 0.862 8 |
| Example 9B | 17.9766 | 67.4356 | 7.85 | 15.6 | 227.9 | 125.68% | 11.62 % | 29.34 % | 89.19 % | 0.870 4 |
| Example 10B | 18.0160 | 67.4619 | 6.97 | 16.5 | 235.1 | 126.11% | 12.09 % | 29.64 % | 90.58 % | 0.878 1 |
| Example 11B | 18.0160 | 67.4488 | 8.04 | 14.9 | 235.4 | 124.77% | 12.01 % | 29.68 % | 90.38 % | 0.875 8 |
| Example 12B | 18.0160 | 67.4619 | 9.10 | 15.2 | 235.7 | 125.33% | 11.22 % | 28.84 % | 91.22 % | 0.867 1 |
| Example 13B | 17.9897 | 67.4094 | 9.18 | 15.9 | 235.9 | 125.64% | 11.91 % | 29.88 % | 92.26 % | 0.881 2 |

**Table 2C**

| | 002 peak 2θ value (°) | 131 peak 2θ value (°) | I1/I2 ratio | Particle Size D50 (um) | C0 (mAh/g) | First-time efficiency | C1/C0 | C2/C0 | Q | n value |
|---|---|---|---|---|---|---|---|---|---|---|
| Example 1C | 18.0160 | 67.4094 | 11.98 | 17.4 | 229.8 | 124.75% | 11.31% | 29.96% | 89.41% | 0.8633 |
| Example 2C | 17.9897 | 67.4488 | 11.63 | 17.3 | 228.3 | 125.35% | 11.15% | 29.54% | 89.15% | 0.8627 |
| Example 3C | 17.9766 | 67.4619 | 7.89 | 14.8 | 231.1 | 126.27% | 12.02% | 30.87% | 91.01% | 0.8794 |
| Example 4C | 18.0160 | 67.4094 | 8.03 | 14.7 | 229.6 | 125.19% | 11.25% | 29.78% | 91.50% | 0.8674 |
| Example 5C | 18.0160 | 67.4094 | 10.97 | 16.9 | 229 | 125.32% | 11.64% | 30.13% | 90.34% | 0.8748 |
| Example 6C | 17.9766 | 67.4619 | 11.04 | 16.8 | 228.7 | 124.84% | 11.77% | 28.95% | 90.37% | 0.8654 |
| Example 7C | 17.9766 | 67.4488 | 10.78 | 17.5 | 228.4 | 125.44% | 11.84% | 29.03% | 90.93% | 0.882 |
| Example 8C | 18.0160 | 67.4225 | 11.53 | 17.3 | 228.2 | 124.74% | 12.03% | 29.04% | 87.52% | 0.8536 |
| Example 9C | 18.0160 | 67.4488 | 6.79 | 15.1 | 228.5 | 125.04% | 11.74% | 29.29% | 91.70% | 0.8694 |
| Example 10C | 18.0160 | 67.4619 | 10.96 | 17.3 | 234.3 | 125.47% | 12.21% | 29.59% | 89.47% | 0.8676 |
| Example 11C | 17.9897 | 67.4488 | 11.05 | 17.8 | 234.6 | 124.92% | 11.98% | 29.72% | 89.27% | 0.8754 |
| Example 12C | 18.0160 | 67.4225 | 10.64 | 17.0 | 234.9 | 125.48% | 11.19% | 28.88% | 89.11% | 0.8708 |
| Example 13C | 17.9897 | 67.4094 | 11.30 | 17.2 | 235.1 | 125.79% | 11.88% | 29.92% | 89.25% | 0.8675 |

**Table 2D**

| | 002 peak 2θ value (°) | 131 peak 2θ value (°) | I1/I2 ratio | Particle Size D50 (um) | C0 (mAh/g) | First-time efficienc y | C1/C0 | C2/C0 | Q | n value |
|---|---|---|---|---|---|---|---|---|---|---|
| Example 1D | 18.0029 | 67.4094 | 7.93 | 15.3 | 234.2 | 124.50% | 11.04% | 29.77% | 88.37 % | 0.872 1 |
| Example 2D | 17.9897 | 67.4488 | 8.18 | 16.0 | 232.7 | 125.10% | 10.88% | 29.35% | 88.24 % | 0.873 1 |
| Example 3D | 17.9897 | 67.4619 | 7.59 | 15.8 | 235.5 | 126.04% | 12.01% | 30.68% | 87.38 % | 0.873 2 |
| Example 4D | 17.9766 | 67.4488 | 8.05 | 14.5 | 234.4 | 125.20% | 11.24% | 29.59% | 88.97 % | 0.868 7 |
| Example 5D | 18.0160 | 67.4225 | 7.68 | 16.2 | 233.9 | 125.33% | 11.65% | 29.88% | 88.43 % | 0.873 6 |
| Example 6D | 18.0160 | 67.4356 | 9.01 | 15.9 | 233.6 | 124.90% | 11.78% | 28.67% | 87.24 % | 0.866 8 |
| Example 7D | 18.0160 | 67.4619 | 9.69 | 14.9 | 233.1 | 125.50% | 11.60% | 28.75% | 88.80 % | 0.870 1 |
| Example 8D | 18.0029 | 67.4488 | 7.92 | 15.5 | 232.9 | 124.80% | 11.79% | 28.98% | 86.39 % | 0.870 8 |
| Example 9D | 17.9897 | 67.4619 | 8.10 | 15.8 | 233.2 | 125.80% | 11.50% | 29.23% | 88.17 % | 0.867 6 |
| Example 10D | 17.9766 | 67.4094 | 7.57 | 15.9 | 234.3 | 125.90% | 11.92% | 29.45% | 88.54 % | 0.863 4 |
| Example 11D | 18.0160 | 67.4488 | 7.06 | 15.3 | 234.6 | 124.56% | 11.84% | 29.49% | 88.34 % | 0.880 9 |
| Example 12D | 17.9766 | 67.4619 | 8.28 | 16.0 | 233.4 | 125.12% | 11.05% | 28.65% | 89.18 % | 0.874 5 |
| Example 13D | 18.0160 | 67.4094 | 9.31 | 16.2 | 233.6 | 125.43% | 11.74% | 29.69% | 90.22 % | 0.864 9 |
| Comparat ive Example 4 | / | / | / | 15.1 | 198.1 | 94.30% | 5.69% | 0.54% | 76.89 % | / |

In Tables 2A-2D, "/" indicates that there is no such parameter.

According to Tables 2A~2D, the followings can be known.
1. According to Examples 1 (ABCD) to 9 (ABCD), although the selection and ratio of different M1 and M2 sources have a certain influence on the composition and crystal structure of the synthesized lithium metal oxide, the gram capacity and cycle performance of the lithium-ion batteries in the Examples under high voltage (4.5V, 4.55V and above voltage system) are outstanding compared with the Comparative Examples.
   it should be emphasized that although the product of Comparative Example 3 has a crystal structure substantially the same as that of the Examples, its performance in terms of gram capacity and cycle performance is still somewhat different from that of the Examples, since it has no doping with specific elements.
2. According to the comparison between Example 1 (ABCD) and Examples 10 to 13 (ABCD), different preparation parameters such as reaction temperature, reaction time, and raw material selection have certain effects on the composition and crystal structure of the lithium metal oxides, and ultimately affect the relevant performance of lithium-ion batteries;
3. Although Comparative Example 3 has a 002 peak and 131 peak, the ratio of intensity of the 002 peak to 131 peak is obviously lower due to the absence of M1 doping element, so its performance in cycle performance is not ideal.

## Claims

1. A positive electrode active material, comprising a lithium metal oxide represented by formula 1 or formula 2;
in a X-ray diffraction spectrum, the lithium metal oxide is a Cmca space group of a cubic lattice system, and has a 002 peak with a 2θ of 17.9° to 18.1°, and a 131 peak with a 2θ of 67.0° to 67.5°;
Li_{n1-y1}Na_{y1}Co_{1-a1-b1}M1_{b1}M2ₐ₁O₂ Formula 1
Li_{n2-y2-b2}Na_{y2}Co₁₋ₐ₂M1_{b2}M2ₐ₂O₂ Formula 2
in Formula 1, 0.6≤n1≤0.8, 0<y1≤0.05, 0≤a1≤0.1 0<b1≤0.1, 0<b1/1-a1-b1<0.1 ;
in Formula 2, 0.6≤n2≤0.8, 0<y2<0.05, 0<a2<0.1, 0<b2<0.02,
wherein M1 is selected from at least one of Te, W, Al, B, P, and K; M2 is a dopant element.

2. The positive electrode active material according to claim 1, wherein in Formula 1, M1 is selected from one of Al, W and/or Te, B and/or P;
in Formula 2, M1 is K.

3. The positive electrode active material according to claim 1 or 2, wherein the positive electrode active material is composed of a core comprising the lithium metal oxide and a coating layer covering at least part of a surface of the core.

4. The positive electrode active material according to claim 1 or 2, wherein when the positive electrode active material has a cut-off voltage of 3.0-3.6 V and has a SOC of zero, 0.7≤n1, n2≤1.0.

5. The positive electrode active material according to claim 1 or 2, wherein the positive electrode active material has a median particle size of 12µm to 20µm.

6. The positive electrode active material according to any one of claims 1 to 5, wherein:
a first-stage discharge capacity ratio of the positive electrode active material is C1/C0≥9%, and a second-stage discharge capacity ratio is C2/C0≥25%;
wherein C0 is a discharge capacity of a half-cell comprising the positive electrode active material when the half-cell is subjected to a discharge treatment at a voltage of 3.0 to 4.55 V; in the discharge treatment, a capacity released by the half-cell when the half-cell is discharged from an initial discharge voltage to 4.4V is defined as C1, and a capacity released by the half-cell when the half-cell is discharged from 3.8V to 3.7V is defined as C2.

7. The positive electrode active material according to claim 1, wherein the 002 peak has a peak intensity of I1, the 131 peak has a peak intensity of I2, and I1/I2≥4.

8. A positive electrode sheet, comprising the positive electrode active material according to any one of claims 1 to 7.

9. The positive electrode sheet according to claim 8, wherein the positive electrode sheet comprises a positive electrode current collector and a positive electrode active layer disposed on at least one surface of the positive electrode current collector, wherein the positive electrode active layer comprises 70-99wt% of the positive electrode active material, 0.5-15wt% of a conductive agent, and 0.5-15wt% of a binder by mass percentage.

10. The positive electrode sheet according to claim 9, wherein the positive electrode active layer comprises 80-98wt% of the positive electrode active material, 1-10wt% of the conductive agent, and 1-10wt% of the binder by mass percentage.

11. A lithium-ion battery, comprising the positive electrode sheet according to any one of claims 8 to 10.

12. The lithium-ion battery according to claim 11, wherein a negative electrode sheet in the lithium-ion battery is a lithium-containing negative electrode sheet.

13. The lithium-ion battery according to claim 12, wherein the negative electrode sheet is a lithium foil.

14. The lithium-ion battery according to claim 12, wherein the negative electrode sheet comprises a negative electrode current collector, a negative electrode active layer, and a lithium material layer, which are stacked with each other, wherein the negative electrode active layer is disposed on at least one surface of the negative electrode current collector, and the negative electrode active layer is close to the negative electrode current collector.

15. The lithium-ion battery according to claim 14, wherein the lithium material layer is a lithium foil.

16. The lithium-ion battery according to claim 14 or 15, wherein metallic lithium in the lithium material layer has a surface density of 0.09mg/cm² to 3.5mg/cm².

17. The lithium-ion battery according to claim 14, wherein the negative electrode active layer comprises 70-99 wt% of a negative electrode active material, 0.5-15 wt% of a conductive agent, and 0.5-15 wt% of a binder by mass percentage.

18. The lithium-ion battery according to claim 17, wherein the negative electrode active layer comprises 80-98wt% of the negative electrode active material, 1-10wt% of the conductive agent, and 1-10wt% of the binder by mass percentage.
